(19) Europäisches Patentamt
European Patent Office
Office européen des brevets

(11) Veröffentlichungsnummer: **0 279 905 A2**

# (12) EUROPÄISCHE PATENTANMELDUNG

(21) Anmeldenummer: **87114730.2**

(51) Int. Cl.⁴: **H01B 3/44**

(22) Anmeldetag: **08.10.87**

(30) Priorität: **26.01.87 DE 3702209**

(43) Veröffentlichungstag der Anmeldung:
**31.08.88 Patentblatt 88/35**

(84) Benannte Vertragsstaaten:
**AT BE CH DE ES FR GB GR IT LI LU NL SE**

(71) Anmelder: **Licentia Patent-Verwaltungs-GmbH**
**Theodor-Stern-Kai 1**
**D-6000 Frankfurt/Main 70(DE)**

(72) Erfinder: **Wartusch, Johann**
**Am Kaiserberg 13**
**D-3502 Vellmar(DE)**
Erfinder: **Gölz, Werner, Dr.**
**Schaftriebweg 64**
**D-6500 Mainz(DE)**
Erfinder: **Andress, Holger, Dr.**
**Herzgraben 12**
**D-6086 Riedstadt(DE)**

(74) Vertreter: **Langer, Karl-Heinz, Dipl.-Ing. et al**
**Licentia Patent-Verwaltungs-GmbH**
**Theodor-Stern-Kai 1**
**D-6000 Frankfurt/Main 70(DE)**

(54) **Kunststoffisolierung und Verfahren zu ihrer Herstellung.**

(57) Bei einer Kunststoffisolierung auf Polyolefinbasis mit einem Spannungsstabilisator aus einer oder mehreren hydrolysierbaren Alkoxiverbindungen eines vierwertigen Elements X ist vorgesehen, daß sie bei Normalbedingungen flüssig sind und mindestens ein Heteroatom enthalten gemäß der Formel

$$(R^aO)_y\ R^b{}_{3-y}\ X-\left[R-X'\ (OR^c)_z\ R^d{}_{2-z}\right]_n-OR^e.$$

Dabei steht n für 1 bis 10, y für 0 bis 3 und z für 0 bis 2. R ist eine Atomgruppe mit Kohlenstoffgerüst und mindestens einem Heteroatom Y. X und X' sind vierwertige Elemente. $R^b$ und $R^d$ stehen für gesättigte oder ungesättigte, aliphatische oder aromatische Kohlenstoffgerüste mit jeweils 1 bis 30 C-Atomen, wobei die freien Valenzen durch Wasserstoff und/oder funktionelle Gruppen abgesättigt sind und wobei R, $R^c$ und $R^d$ für sich in jeder Klammer in gleicher oder unterschiedlicher Zusammensetzung auftreten und $R^a$, $R^c$ und $R^e$ Kohlenwasserstoffsubstituenten mit 1 bis 18 C-Atomen sind.

EP 0 279 905 A2

# Kunststoffisolierung

Die Erfindung betrifft eine Kunststoffisolierung nach dem Oberbegriff des Anspruchs 1. Solche Kunststoffisolierungen werden hauptsächlich zur Isolierung von Hochspannungskabeln verwendet. In ihnen können sich bei Spannungsbeanspruchung sogenannte treeing-Phänomene ausbilden, das sind mikroskopisch sichtbare, bäumchenartige bzw. büschelartige Zerstörungserscheinungen in der Isolierung. Von großer Bedeutung sind die "water trees", die bei hohen Feldstärken an Fehlstellen auftreten, in denen Wasser konzentriert ist. Zur Vermeidung der water trees bzw. der Hemmung ihres Wachstums werden der Isolierung Stabilisatoren zugesetzt.

Aus der DE-PS 27 37 430 ist es bekannt, einer Polyolefin-Isolierung Spannungsstabilisatoren aus Alkoxisilanen zuzusetzen. Die Alkoxisilane der allgemeinen Formel $R_x$-Si (O-R) $_{4-x}$ wobei x = 0 bis 3 ist, enthalten in R einen aliphatischen, aromatischen oder cycloaliphatischen Kohlenwasserstoffrest, der gegebenenfalls noch durch Amino-, Epoxigruppen oder andere substituiert sein kann. Insbesondere ist R ein Hydroxyalkylrest.

Die bekannten Spannungsstabilisatoren zeigen jedoch eine nicht immer ausreichende Mischbarkeit mit dem Basispolymer, so daß die Herstellung der Isolierung erschwert ist. Wenn die spannungsstabilisierenden Zusätze nicht homogen in der Mischung vorliegen, ist zudem ihre Wirksamkeit sehr stark eingeschränkt; denn die Migrationswege zu den watertrees werden dann, wenn diese Schädigung auftritt, im Mittel zu groß. Manche an sich gut wirksame Stabilisatoren haben außerdem den Nachteil, die VPE-Schmelze intransparent zu machen, was die Kontrolle der Sauberkeit und Homogenität der Isolierung nach einer neueren VDE-Forderung unmöglich macht.

Der Erfindung liegt die Aufgabe zugrunde, eine Kunststoffisolierung anzugeben, in deren Grundmaterial sich mehrfach wirksame Stabilisator-Zusätze bei guter Schmelzen-Transparenz einmischen lassen.

Diese Aufgabe wird gemäß der Erfindung durch die im Patentanspruch 1 gekennzeichneten Merkmale gelöst.

Vorteilhafte Weiterbildungen der Erfindung sind in den Unteransprüchen enthalten.

Das Kunststoffisoliermaterial gemäß der Erfindung zeigt nicht nur eine gute Langzeitstabilität, sondern der Stabilisator läßt sich auch leicht in die Isolierung einmischen. Bei Verwendung von vernetztem Kunststoff-Grundmaterial wird die Vernetzung durch den Stabilisator-Zusatz nicht beeinträchtigt. Ferner wird durch Vermeiden rekristallisierbarer Substanzen im VPE nicht nur ein ausreichender Schutz gegen das Entstehen und Wachsen von water trees gewährleistet, sondern dadurch auch die Entstehung von "electrical trees" behindert, so daß auf diese Weise eine erhöhte Sicherheit gegen elektrischen Durchschlag erzielt wird. Zudem wird bei geeigneter Komposition, beispielsweise bei Vorhandensein entsprechender funktioneller Gruppen im Stabilisator, neben letzterem auch das Wärmealterungsverhalten günstig beeinflußt.

Die Zusätze verflüchtigen sich auch bei zunehmender Gebrauchsdauer nicht oder wenigstens nicht merklich. Insbesondere aber erlaubt die mit den erfindungsgemäßen Stabilisatoren versehene Isolierung infolge der Transparenz ihrer Schmelze eine nach VDE geforderte Reinheitskontrolle.

Die Wirkung der erfindungsgemäßen Stabilisatoren ist darin begründet, daß sie sich durch das Fehlen von hydrophilen Gruppen sehr gut in das Basispolymer einmischen lassen und dementsprechend das so stabilisierte VPE gut verarbeitbar ist, wobei dieses jedoch ein Mindestmaß an Polarität bzw. hydrophiler Verhaltensweise vermittelt erhält, welche nach den heute bekannten Mechanismen zur Inhibierung von water trees beiträgt.

Andererseits reagieren sie mit Wasser unter Freisetzung von hydrophilen Substanzen, welche für die "watertree-Retardierung" von Bedeutung sind. Das Wasser, das herstellungsbedingt vorhanden ist, bzw. beim Betrieb des Isolierstoffes in diesen eindiffundiert, wird auf diese Weise eliminiert (durch chemische Reaktion oder physikalisch gebunden). Sollte sich an der Stelle der Isolierung, an welcher sich Stabilisatormoleküle befinden, ein water tree zu bilden beginnen, wird außer der Inhibierung des watertree-Wachstums durch das Silan (Titanat bzw. die dem analogen Wirkgruppen) selbst auch Wasser verbraucht, um den Stabilisator zu aktivieren. Der aktivierte Stabilisator verhindert dann das Wachstum der Defekte zusätzlich.

Um beispielsweise Schwermetallverbindungen elektrisch unwirksam zu machen, werden Heteroatome an geeigneter Stelle in die Stabilisatorsubstanz eingebaut. Die Heteroatome treten in einer der zahlreichen Gruppierungen auf, die zur Komplexbildung geeignet sind.

Nachfolgend sollen einige Beispiele für Stabilisatoren und deren Wirkung aufgeführt werden.

Ein Alkoxisilan gemäß der Erfindung ist z.B. Bis (3-trimethoxisilylpropyl) monosulfid der folgenden Struktur:

$(CH_3O)_3Si-CH_2CH_2CH_2-S-CH_2CH_2CH_2-Si(OCH_3)_3$.

Statt $OCH_3$ kann auch $OC_2H_5$ stehen mit dem Vorteil weiter verringerter Flüchtigkeit. Bei der hier gewählten Schreibweise in Anlehnung an die Grundformel des Anspruchs 1 ist Y = S und n = 1 gewählt. Bei n = 2 wird die Flüchtigkeit der Verbindung noch geringer.

Dieses Alkoxdisian bildet unter der Einwirkung von Wasser einen niederen Alkohol und eine Silanolverbindung. Die OH-Gruppen sind für die Wirksamkeit als "watertree-Stabilisator" von Bedeutung. Desweiteren kann die Thioäther-Brücke im Molekül für eine in die Isolierung gelangende schädliche Übergangsmetall-Verunreinigung als Komplexligand Bedeutung erlangen. Damit wird die Verunreinigung elektrisch unwirksam.

Die Wirksamkeit des vorgenannten Stabilisators mit Methoxigruppen in einem vernetzten Polyäthylen mit 83 % Gel-Gehalt ersieht man aus einem Test mit inhomogener elektrischer Feldanordnung (sog. Nadeltest). Während bei frisch hergestellten unstabilisierten Proben die Länge der watertrees 100 µm im Durchschnitt und 185 µm im Maximum beträgt, sind die entsprechenden Werte bei Zusatz von 1 % Stabilisator der oben angegebenen Zusammensetzung, 50 - 70 µm bzw. 70 - 170 µm. Die Verbesserung der VPE-Mischung ersieht man aber erst bei den getemperten Proben, wenn die nur temporär stabilisierend wirkenden Peroxidspaltprodukte entfernt sind. Dabei werden für die unstabilisierten Proben 290 µm bzw. 440 µm im Maximum gemessen (gegenwärtiges Handelsprodukt) während für die stabilisierten Proben sich im Mittel 55 µm und im Maximum 100 µm als Länge der water trees ergibt. Auch ein polymerseitig verbessertes, aber nicht mit Silan stabilisiertes VPE-Handelsprodukt erbringt nach dem Tempern noch 150 µm (Durchschnitt) bzw. 325 µm (Maximum) watertree-Wachstumslänge. Entsprechende Verbindungen auf Titanatbasis zeigten gleichfalls gute Stabilisatorwirkung.

Es zeigt sich also, daß unter verschärften, die Betriebsbedingungen nachahmenden Versuchsbedingungen, die stabilisierte Mischung erhebliche Vorteile hinsichtlich Durchschlagsgefahr bzw. als Langzeitreserve aufweist.

Eine Abwandlung dieser Alkoxiverbindungen beruht auf der Möglichkeit, in der obigen Strukturformel die $CH_3$-Gruppen zumindest teilweise durch veträglichkeitssteigernde Octylgruppen zu ersetzen. Weiterhin kann durch Vervielfältigung des mittleren Molekülteils (n = 2, 3 usw.) eine oligomere Verbindung geschaffen werden, deren geringere Diffusionsgeschwindigkeit einen gesteigerten Langzeit-Verbleib im VPE sichert. Schließlich können funktionelle Gruppen mit C=C-Doppelbindungen (beispielsweise Vinylgruppen) bei den Substituenten $R^b$ und/oder $R^d$ eingeführt werden, durch welche eine Pfropfung des Stabilisators auf ein Polymermolekül stattfindet. Weitere funktionelle Gruppen an den Substituenten R′ und/oder R″ können das electrical treeing und zugleich die oxidative Alterung des Polymers verzögern.

Für das Einmischen der Alkoxisilane ist neben der chemischen Verträglichkeit und Mischbarkeit mit dem Basispolymer auch die Konsistenz des sogenannten Spannungsstabilisators von Interesse. Vorzugsweise wird man flüssige Alkoxisilane auswählen. Wegen der Langzeitstabilität empfiehlt es sich, die Größe der Moleküle bzw. das Molekulargewicht derart auszuwählen, daß ein Verlust des Stabilisators durch die Diffusion aus dem Material bei erhöhter Temperatur nur in vernachlässigbarerem Maße erfolgt. Die Stabilisatoren bzw. die relevanten Hydrolyseprodukte sollen daher vorzugsweise Siedepunkte oberhalb von 140° C haben.

Der flüssige Aggregatzustand der beanspruchten Alkoxisilane sowie deren gutes Löse-und Diffusionsvermögen bieten gute Voraussetzungen für ein auf Diffusion/Absorption basierendes Herstellungsverfahren einer stabilisierten Mischung, indem im Silan die Antioxidantien (sofern sie nicht gebunden sind) und Vernetzungsmittel gelöst und bei geeigneten Bedingungen auf das Polymer-Granulat aufgebracht werden. Ein solches schonendes und verunreinigungsfreies 'Misch'-Verfahren ist von großer Bedeutung für die extremen Sauberkeitsanforderungen an eine Hochspannungsisolierung.

Eine andere Möglichkeit, Silane mit hinreichend hohem Molekulargewicht für Stabilisierungszweck bereit zu stellen, besteht darin, statt der Thioätherbrücke eine sekundäre Aminogruppe in das Molekül einzuführen, wie es die folgende Formel angibt:

$(C_2H_5O)_3$-Si-$CH_2CH_2CH_2$-NH-$CH_2CH_2CH_2$-Si$(OC_2H_5)_3$

R′ und R″ sind hier unverzweigte Alkanreste mit je 3 Kohlenstoffatomen.

Y′ ist hier die sekundäre Aminogruppe; weiter ist n = 1, z = 2 und y = 3.

Eine sekundäre Aminogruppe kann auch durch oligomerisierende Verknüpfung, beispielsweise eines Vinylsilans mit 2,2,4-Trimethyl-3,4-dihydrochinolin eingeführt werden.

Wesentlich für Amino-Silane ist, daß keine freien $NH_2$-Gruppen vorliegen, weil diese mit Ketonen aus den Vernetzerspaltprodukten Schiff-Basen bilden, welche das VPE intransparent machen und zudem als Festkörper Startstellen für "electrical" und "bow tie trees" sind. Letztere gehen von Inhomogenitäten im Volumen der Isolierung aus.

Bevorzugte Gruppen Y′ sind Alkyl-Merkapto, Alkyl-Hydroxi, Thiophen, Furan und Pyrrol.

Durch funktionelle Gruppen in R′ und/oder R″ wird die Bildung oder das Wachstum von water trees bzw.

electrical trees behindert.

Beispielsweise kann R′ oder R″ ein Keto-Rest der Form

$- CH_2 - \underset{\underset{O}{\|}}{C} -CH_2 -CH_2 -$oder $-CH_2 - \underset{\underset{O}{\|}}{C} -CH_2 - \underset{\underset{O}{\|}}{C} -CH_2$

sein, der durch Tautometrie in die Enolform übergehen kann. Besonders durch Einbau eines Styrol-oder Diäthylbenzolrestes anstelle von R′ oder R″ wird beispielsweise ein resonanzfähiges Aromatensystem für die Stabilisierung ausgenutzt. Als funktionelle Gruppen sind selbstverständlich alle bisher bekannten stabilisierend wirkenden Gruppen einsetzbar, beispielsweise auch Hydroxylgruppen.

Selbstverständlich können auch Gemische aus den einzelnen Stabilisatoren Verwendung finden.

Als Basispolymere verwendet man Polyolefine wie zum Beispiel Polyethylen oder Ethylencopolymere, vernetzt oder unvernetzt, oder Elastomere. Auch Verschnitte von Basispolymeren untereinander können Verwendung finden.

Mit den hier beschriebenen Spannungsstabilisator-Zusätzen ist es möglich, im Durchschlagsverhalten verbesserte Isolierstoffe auf dem Gebiet der Elektrotechnik zur Verfügung zu stellen. Von besonderer wirtschaftlicher Bedeutung sind die Isolierungen von Hochspannungskabeln.

## Ansprüche

1. Kunststoffisolierung auf Polyolefinbasis mit einem Spannungsstabilisator aus einer oder mehreren hydrolysierbaren Alkoxiverbindungen eines vierwertigen Elements X, dadurch gekennzeichnet, daß sie von etwa - 25° C bis mindestens 140° C flüssig sind und mindestens ein Heteroatom enthalten gemäß der Formel

$$(R^aO)_y \; R^b_{3-y} \; X-\left[R-X'(OR^c)_z \; R^d_{2-z}\right]_n-OR^e,$$

wobei
n von 1 bis 10,
y von 0 bis 3,
z von 0 bis 2 variabel,
R eine Atomgruppe mit Kohlenstoffgerüst und mindestens einem Heteroatom Y ist,
X und X′ vierwertige Elemente sind,
$R_b$, $R_d$ gesättigte oder ungesättigte, aliphatische oder aromatische Kohlenstoffgerüste mit jeweils 1 bis 30 C-Atomen sind, wobei die freien Valenzen durch Wasserstoff und/oder funktionelle Gruppen abgesättigt sind und wobei R, $R^a$, $R^b$, $R^c$ und $R^d$ für sich in gleicher oder für jeden Index n, y oder z unterschiedlicher Zusammensetzung auftreten, und
$R^a$, $R^c$ und $R^e$ Kohlenwasserstoffgruppen mit 1 bis 18 C-Atomen sind.

2. Kunststoffisolierung nach Anspruch 1, dadurch gekennzeichnet, daß -R-die Form -R′-Y′-R″-aufweist, wobei Y′ eine Gruppe mit mindestens einem Heteroatom Y ist, R′ und R″ alipathische oder aromatische Kohlenstoffgerüste mit jeweils 2 bis 40 C-Atomen sind, wobei die freien Valenzen durch Wasserstoff und/oder funktionelle Gruppen abgesättigt sind und wobei R′ und R″ gleichartige oder verschiedenartige Zusammensetzungen haben.

3. Kunststoffisolierung nach Anspruch 1, dadurch gekennzeichnet, daß -R-die Form $- \underset{\underset{Y}{|}}{R^*} -$ aufweist, wobei R* eine im wesentlichen aus Kohlenwasserstoff bestehende aldipathische oder aromatische Gruppierung darstellt und Y′ eine Gruppe mit mindestens einem Heteroatom Y ist.

4. Kunststoffisolierung nach einem der Ansprüche 1 bis 3, dadurch gekennzeichnet, daß Y das Element Schwefel ist.

5. Kunststoffisolierung nach einem der Ansprüche 1 bis 3, dadurch gekennzeichnet, daß Y das Element Sauerstoff ist.

6. Kunststoffisolierung nach Anspruch 2, dadurch gekennzeichnet, daß R eine sekundäre Aminogruppe enthält.

7. Kunststoffisolierung nach Anspruch 2, dadurch gekennzeichnet, daß R'=R" die Methyl-tertiärbu tylphenoxi-Gruppe ist.

8. Kunststoffisolierung nach Anspruch 1, dadurch gekennzeichnet, daß X und/oder X' das Element Silizium ist.

9. Kunststoffisolierung nach Anspruch 1, dadurch gekennzeichnet, daß X und/oder X' das Element Titan ist.

10. Kunststoffisolierung nach Anspruch 3, dadurch gekennzeichnet, daß R eine heteroaromatische Gruppe ist.

11. Kunststoffisolierung nach Anspruch 1, dadurch gekennzeichnet, daß mindestens ein Substituent des Typs $R^{a-e}$ eine Octylgruppe ist.

12. Kunststoffisolierung nach Anspruch 3, dadurch gekennzeichnet, daß die funktionellen Gruppen in R' und/oder R" Carbonyl-und/oder Hydroxylgruppen sind.

13. Kunststoffisolierung nach einem der Ansprüche 1 bis 10, dadurch gekennzeichnet, daß di-oder oligomere Siloxane verwendet sind, welche aus dem Monomeren (n = 1) durch partielle Hydrolyse und anschließende Kondensation gebildet sind.

14. Kunststoffisolierung nach einem der Ansprüche 1 bis 4, dadurch gekennzeichnet, daß ein Alkoxisilan verwendet wird, in welchem

X = X' = Si,

Y = S,

n = 1,

y = 3,

R' = R" = $C_3H_6$ ist und für $R^a$, $R^b$, $R^c$, $R^d$ und $R^e$ die Gruppen $C_mH_{2m+1}$, mit < 10 vorgesehen sind.

15. Kunststoffisolierung nach einem der Ansprüche 1 bis 14, dadurch gekennzeichnet, daß der Spannungsstabilisator ein Gemisch aus verschiedenen Stabilisator-Verbindungen ist.

16. Kunststoffisolierung nach einem der Ansprüche 1 bis 15, dadurch gekennzeichnet, daß der Spannungsstabilisator ein Gemisch aus verschiedenen Stabilisator-Verbindungen ist.

17. Kunststoffisolierung nach einem der Ansprüche 1 bis 16, dadurch gekennzeichnet, daß als Basispolymer Polyolefine Verwendung finden.

18. Kunststoffisolierung nach einem der Ansprüche 1 bis 17, dadurch gekennzeichnet, daß für die Isolierung als Basispolymer Polyethylen mit einem Vernetzungsgrad zwischen 0 und 100 % Verwendung findet.

19. Kunststoffisolierung nach einem der Ansprüche 1 bis 18, dadurch gekennzeichnet, daß als Basispolymer vernetzte Homo-oder Copolymerisate des Ethylens oder Gemische aus Homo-und Copolymerisaten Verwendung finden.

20. Kunststoffisolierung nach einem der Ansprüche 1 bis 19, dadurch gekennzeichnet, daß Spannungsstabilisatoren zusammen mit Antioxiddantien und/oder Vernetzungsmitteln nach der Diffusionsmethode in das Polymer eingebracht sind.